(19) Europäisches Patentamt

European Patent Office

Office européen des brevets

(11) EP 2 020 791 A1

## (12) EUROPEAN PATENT APPLICATION

(43) Date of publication:
04.02.2009 Bulletin 2009/06

(51) Int Cl.:
H04L 29/06 (2006.01)    H04L 12/56 (2006.01)

(21) Application number: 07014932.3

(22) Date of filing: 30.07.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(71) Applicant: SIEMENS AKTIENGESELLSCHAFT
80333 München (DE)

(72) Inventor: Thakur, Mohit
80687 München (DE)

(54) **Methods and devices for sending of data packets and methods and devices for reconstructing data packets**

(57)    The invention covers a method and a device for sending two data packets of a data stream. One joint data packet is generated using both packets. The joint packet is sent via a first path and one of the two data packets is sent via a second path from a source node to a destination node, whereby the two paths are disjoint paths. The invention also covers a method and a device for recovering all data packets of the data stream. One of the data packets of the data stream and the joint data packet are received. Using both the joint data packet and the received data packet allows reconstructing the other data packet of the data stream. The invention also proposes methods and devices to use two joint packets while using two data streams to be transmitted. The invention results in a secure transmission of data packets from a source to a destination node.

FIG 1

EP 2 020 791 A1

**Description**

This invention relates to methods and devices for sending of data packets in a network with nodes and methods and devices for reconstructing data packets.

In today's business data communication often uses public communication channels, such as the internet. It is well known that transmitting data via the internet it very unsafe. Hence there is a great need to provide solutions that make data communication safer.

There are several solutions available that support safe data communication. One of these solutions encrypts the data by an encryption key and transmits this encrypted data. A receiver decrypts the received encrypted data by an decryption key and forwards the decrypted data to a user. One of these solutions is known as PGP (PGP - Pretty Good Privacy) [1].

One drawback of this solution is their high complexity. This results in a need for a powerful microcontroller to perform encryption and/or decryption.

Hence it is an objective of this invention to offer a method and a device for sending of data packets in a network that result in both a safe data communication in the network and a low complexity.

It is another objective of this invention to offer a method and a device for reconstructing data packets that are received according to the method and/or the device for sending of data packets in a network, whereby this method and device for reconstructing shall also show low complexity for the reconstruction.

These objectives are solved by the independent claims. The dependent claims give enhancements of the invention.

The invention covers a method for sending data packets of a first data packet stream in a network with nodes with the following steps:

Selecting two paths from a source node to a destination node in the network, whereby the paths are disjoint;

Generating a first joint data packet by an encoding method using both the first and second data packets, whereby on the basis of both the first joint data packet and one of the data packets the other data packet is recoverable;

Selecting two selected data packets by assigning the first joint data packet to the first selected data packet, and one of the data packets of the first data packet stream to the second selected data packet;

Sending the first selected data packet over the first path and the second selected data packet over the second path.

This methods shows the advantage that the data transmission of the first data stream is safe, because on the one hand the second data packet is transmitted in a coded form (= joint packet) that requires the first data packet to be recoverable. On the other hand an intruder has to get access to two communication paths, which are disjoint, and to synchronize both to get the requested information in the correct order of time. In addition in order to recover the second packet the intruder has to know the algorithm to decode that is to recover the second data packet. As the access to all information to recover the first data stream is very complex the communication of the data packets of the first data stream is quite safe.

The invention also covers a method for sending data packets of a first data packet stream and of data packets of a second data packet stream in a network with nodes with the following steps:

Selecting two paths from a source node to a destination node in the network, whereby the paths are disjoint;

Generating a first joint data packet by an encoding method using both the first data packet of the first data stream and the first data packet of the second data stream, whereby on the basis of both the first joint data packet and one of the data packets the other data packet is recoverable;

Generating a second joint data packet by the encoding method by using the second data packet of the first data stream and the second data packet of the second data stream, whereby on the basis of both the second joint data packet and one of the data packets the other data packet is recoverable;

Selecting four data packets by assigning the first and second joint data packets to the first and second selected data packets, the first data packets of the first data packet stream to the third selected data packet and by the second data packet of the second data packet stream to the fourth selected data packet;

Sending two selected data packets over the first path and the residual two selected data packets over the second path, whereby one of the two selected data packets that are sent via the same path must not contain a data packet that was used to encode the other of these two selected data packets.

This method shows the same advantages as describes above. In addition the security of the data transmission is enhanced, because four data packets have to be eavesdropped and two decoding steps have to be performed to get access to all four data packets. In general the encoding methods used for generating the first and second joint data packet may be different. This results in an improved security.

In addition the method may reselect the two paths before sending the respective second selected data packet over the first and second paths, whereby these two paths are disjoint. This gives extra protection against eavesdropping.

The methods above can perform the encoding method by a linear combination method, e.g. by a bitwise EXOR-operation. This results in a simple and low complex execution of the encoding method.

The invention also covers a method for reconstructing a second data packet of a first data packet stream with the following steps:

Receiving a first joint data packet from a first path and a first data packet of the first data packet stream from a second path at a destination node, whereby the first and second paths are two paths from a source node to the destination node in a network and the two paths are disjoint, and whereby the joint data packet is generated using both the first and second data packets;

Reconstructing the second data packet by performing a decoding method using both the joint data packet and the first data packet.

This method shows the advantage that the data packets of the first data stream that are transmitted by the method for sending data packets by the aid of one joint data packet can be recovered in a low complex but secure way. The decoding method is designed such that the encoding method can be reversed. Only by having access to the joint and the first data packet and to the decoding method an intruder is able to recover the entire first data stream.

In an alternative design, the method for reconstructing a second data packet of a first data packet stream and a first data packet of a second data packet stream can use the following steps:

Receiving two selected data packets from a first path and another two selected packets from a second path,

- whereby the selected data packets cover a first and a second joint data packet, a first data packet of the first data packet stream and a second data packet of the second data packet stream,
- whereby the first and second paths are two paths from a source node to the destination node in a network and the two paths are disjoint,
- whereby the first joint data packet is generated using both the first data packet of the first data stream and the first data packet of the second data stream and the second joint data packet is generated by using both the second data packet of the first data stream and the second data packet of the second data stream;

Reconstructing the second data packet of the first data packet stream by performing a decoding method using both the second joint data packet and the second data packet of the second data packet stream;

Reconstructing the first data packet of the second data packet stream by performing the decoding method using both the first joint data packet and the first data packet of the first data packet stream.

This method shows the same advantages as describes above. In addition the security of the data transmission is enhanced, because four data packets have to be eavesdropped and two decoding steps have to be performed to get access to all four data packets. In general the encoding methods used for generating the first and second joint data packet may be different. This results in an improved security, because an invader must have to access both to the data packets and the decoding methods.

In an enhancement the decoding method can be implemented by a linear combination method, e.g. by a bitwise EXOR-operation. This enhancement results in a low complex realization of the decoding method.

A device for sending of data packets of a first data packet stream in a network with nodes is also part of this invention, whereby the device covers the following means:

a first means to select two paths from a source node to a destination node in the network, whereby the paths are disjoint;

a second means to generate a first joint data packet by an encoding method using both the first and second data packets, whereby on the basis of both the first joint data packet and

one of the data packets the other data packet is recoverable; a third means to select two selected data packets by assigning the first joint data packet to the first selected data packet, and one of the data packets of the first data packet stream to the second selected data packet;

a fourth means to send the first selected data packet over the first path and the second selected data packet over the second path.

By the aid of this device the method of sending of data packets of a first data packet stream in a network can be implemented and executed.

An alternative device for sending data packets of a first data packet stream and of data packets of a second data packet stream in a network with nodes covers the following means:

a first means to select two paths from a source node to a destination node in the network, whereby the paths are disjoint;
a second means to generate a first joint data packet by an encoding method using both the first data packet of the first data stream and the first data packet of the second data stream, whereby on the basis of both the first joint data packet and one of the data packets the other data packet is recoverable, and to generate a second joint data packet by the encoding method by using the second data packet of the first data stream and the second data packet of the second data stream, whereby on the basis of both the second joint data packet and one of the data packets the other data packet is recoverable;
a third means to select four data packets by assigning the first and second joint data packets to the first and second selected data packets, the first data packets of the first data packet stream to the third selected data packet and by the second data packet of the second data packet stream to the fourth selected data packet;
a fourth means to send two selected data packets over the first path and the residual two selected data packets over the second path, whereby one of the two selected data packets that are sent via the same path must not contain a data packet that was used to encode the other of these two selected data packets.

By the aid of this device the method of sending of data packets of a first data packet stream in a network can be implemented and executed.
The invention also covers a device for reconstructing a second data packet of a first data packet stream with the following means:

a fifth means to receive a first joint data packet from a first path and the first data packet of the first data stream from a second path at a destination node, whereby the first and second paths are two paths from a source node to the destination node in a network and the two paths are disjoint, and whereby the joint data packet is generated using both the first and second data packets;
a sixth means to reconstruct the second data packet by performing a decoding method using both the joint data packet and the first data packet .

By the aid of this device the method of recovering of data packets can be implemented and executed.
Finally a device for reconstructing a second data packet of a first data packet stream and a first data packet of a second data packet stream is part of this invention that covers the following means:

a fifth means to receive two selected data packets from a first path and another two selected packets from a second path,

- whereby the selected data packets cover a first and a second joint data packet, a first data packet of the first data packet stream and a second data packet of the second data packet stream,
- whereby the first and second paths are two paths from a source node to the destination node in a network and the two paths are disjoint,
- whereby the first joint data packet is generated using both the first data packet of the first data stream and the first data packet of the second data stream and the second joint data packet is generated using both the second data packet of the first data stream and the second data packet of the second data stream;

Reconstructing the second data packet of the first data packet stream by performing a decoding method using both the second joint data packet and the second data packet of the second data packet stream;
a sixth means to reconstruct the first data packet of the second data packet stream by performing the decoding method using both the first joint data packet and the first data packet of the first data packet stream .

By the aid of this device the method of recovering of data packets can be implemented and executed.
It should be noted that a node can be a server, gateway or an end user terminal. The path that consists of connections from node to node can be of any kind of known connection means, e.g. LAN (LAN-Local Area Network), WLAN (WLAN-Wireless LAN), ATM (ATM-Asynchronous Transfer Mode) or GSM (GSM-Global System for Mobile) technology or any combination of one or several connection technologies. The paths are disjoint. This means that one particular link between two nodes of each path is only part of one path. The invention also covers a method or device that is a combination of the method/device for sending of data packets and of the method/device for recovering a data packet either with one or two joint data packets.

The invention and its variations will be described by several figures. The following figures show:

Figure 1   a network with several nodes, whereby the invention is used to send data packets;

Figure 2   a flow chart and a device for sending of data packets in a network;

Figure 3   a flow chart and a device for reconstructing data packets;

Figure 4   a network with several nodes, whereby the invention is used to send data packets of two data streams.

Elements with the same functions are labeled by the same reference signs.

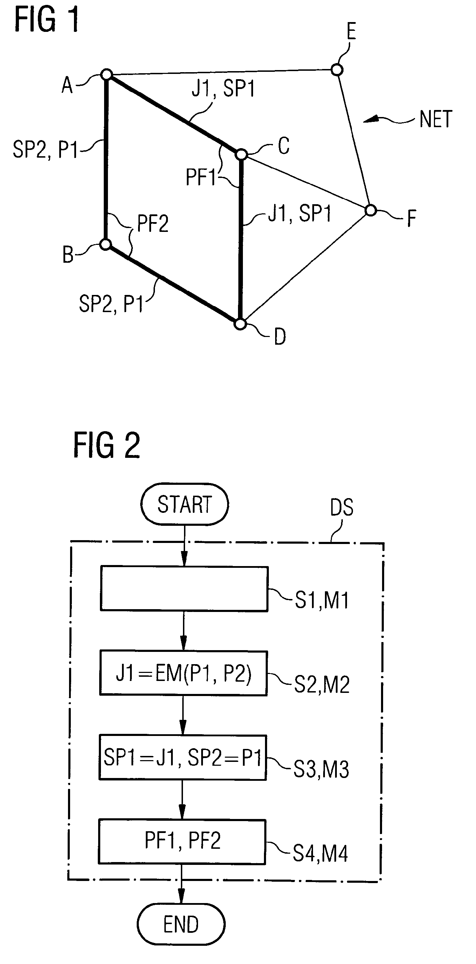

A first example of the invention is shown in figure 1. In figure 1 a network NET can be seen that covers several nodes A, ..., F, indicated by circles. Two data packets P1, P2, e.g. video, image, audio or any kind of data, of a first data packet stream P shall be transported from the source node A to the destination node D. The source node A is a video server that sends video data packets to the destination node D, whereby the destination node D is a e.g. set-top box connected to a television system.

Figure 2 shows a flow chart that visualizes the steps the source node has to perform for sending data packets according to this invention. The flow chart is started in step STA. Next, in a first step S1 two paths PF1, PF2 from the source node A to the destination node D are selected, whereby the paths PF1, PF2 are disjoint. In general a path is a route through the network linking one or more nodes from the source node to the destination node. The nodes along the paths can be connected by LAN (LAN - Local Area Network). In this example of figure 1 the nodes are connected by LAN-technology using the IP-technology (IP-Internet Protocol). Further the paths are disjoint. This means that a particular link between two nodes of each path is only part of one the two path. In figure 1 path PF1 is created by the links A-B, B-D and path PF2 is set up by the links A-C, C-D. Besides the paths PF1, PF2 also the links A-E, E-F, F-D would generate another disjoint path to PF1, PF2.

In a second step S2 a first joint data packet J1 is generated by using an encoding method EM to combine the first and second data packet P1, P2. There is a novel research field to transmit data packets through a network that is called Network Coding. Network Coding proposes to combine data packets such that they can be reconstructed by a receiver by the help of one or several other packets. Such an encoding method described by Network Coding can be used for generating the first joint data packet J1. For example the data packets P1 and P2 are combined by a linear combination, e.g. by a XOR bitwise function (XOR-Exclusive Or) such as

$$\mathtt{J1 \ = \ EM( \ P1, \ P2) \ = \ P1 \ + \ P2 \qquad (1),}$$

whereby '+'-sign indicates a bitwise XOR addition operation. The XOR operation represents the encoding method EM. Example: Given P1 = 0101 and P2 = 1100 then J1 = 0110.

In a third step S3 two selected data packets SP1, SP2 are selected from the group of the joint data packet J1 and one of the two data packets P1, P2. In this example the first selected data packet SP1 is the joint data packet SP1=J1 and the second selected data packet SP2 is the first data packet SP2=P1.

In a fourth step S4 the selected data packets are send by the source node A to the network NET. The first selected data packet SP1 is put on the first path PF1 and the second selected data packet SP2 on the second path PF2. Due to the case that both paths PF1 and PF2 are disjoint the joint data packet J1 and the first data packet P1 will be forwarded over different links and different nodes before arriving at the destination node D. After these packets are sent to the network on both paths the flow chart will terminate in step END.

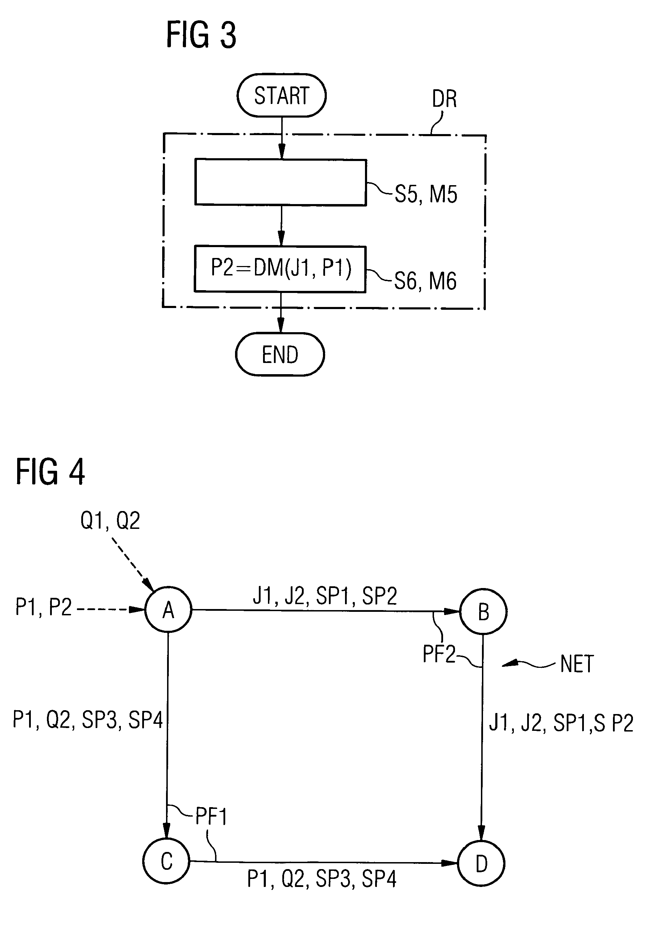

At the destination node D the two selected data packets SP1, SP2 are used to reconstruct the data packets of the first data stream. Figure 3 shows the steps executed by the destination node D in form of a flow chart, according to this invention. This flow chart starts with step STA. In the next step S5 the first selected data packet SP1 that is equal joint data packet J1=SP1 arrives via the first path PF1 and the second selected data packet SP2 that is equal to the first packet P1=SP2 via the second path PF2. In step S6 the second data packet P2 is reconstructed by performing a decoding method DM. This decoding method is the pendant of the encoding method EM and may be taken from a known decoding method such as Network Coding, e.g. a linear decoding method. In the case the joint data packet J1 is generated by equation (1) the decoding method DM is

$$\mathtt{P2 \ = \ DM(J1, \ P1) \ = \ J1 \ + \ P1 \qquad (2)}$$

**5**

whereby '+'-sign indicates a bitwise XOR addition operation. The XOR operation represents the decoding method DM.
Example: Given P1 = 0101 and J1 = 0110 then P2 = 1100.
Hence the first data packet P1 and the second data packet P2 of the first data stream P are reconstructed.

This flow chart diagram of figure 3 terminates in step END.

In figure 1 the source node A represents a device DS for sending data packets with the following means:

- a first means M1 to perform the first step S1;
- a second means M2 to perform the second step S2;
- a third means M3 to perform the third step S3;
- a fourth means M4 to perform the fourth step S4.

In figure 3 the destination node D represents a device DR for reconstructing missing data packets with the following means:

- a fifth means M5 to perform the fifth step S5;
- a sixth means M6 to perform the sixth step S6.

The means M1, ..., M6 can be implemented in hardware, software or in a combination of hard- and software.

An advantage of this invention is that by using e.g. the Network Coding scheme for en- and decoding of the joint packet a packet load traffic is balanced and at the same time the transmission is secured, if an enemy tries to sniff data packets on any link of the network NET or any node of the network NET, because to reconstruct all data packets P1 and P2 of the first data packet stream P the enemy has to access all packets on both the first and on the second path.

One of possible applications using this invention is the MSTP-protocol (MSTP- Multiple Spanning Tree Protocol IEEE 802.1w) that finds multiple spanning tree instances for an Ethernet network topology. Hence only disjoint spanning trees have to be identified and then the generation of the joint data packet has to be applied. This can be performed without any heavy complex security method and guarantees a robust secured transmission of data packets.

Another example of the invention will be described by the aid of figure 4. Figure 4 shows the network NET with four node A, ..., D. Two data packet streams P, Q shall be transmitted from the source node A to the destination node D. Each of the data packet streams cover its data packets such as P(P1, P2) and Q(Q1, Q2). The first path PF1 is formed by the links A-C, C-D and the second path PF2 by the links A-B, B-D. Two joint data packets J1, J2 are formed such that for the generation of each joint data packet one data packet P1 is taken from the first data packet stream P and an another data packets Q1 from the second data packet stream Q. Hence the two joint data packets can be derived by taking the encoding method EM as used in the previous example into account by:

$$J1 = EM(P1, Q1) = P1 + Q1 \qquad (3)$$

$$J2 = EM(P2, Q2) = P2 + Q2 \qquad (4).$$

In a next step four selected data packets SP1, ..., SP4 are formed by

- the first and second joint data packets SP1=J1, SP2=J2,
- the first data packets SP3=P1 of the first data packet stream P and
- the second data packets SP4=Q2 of the second data packet stream Q.

Another option to form the selected data packets is by the first and second joint data packets J1, J2, by the second data packets P2 of the first data packet stream P and by the first data packet Q2 of the second data packet stream Q.

The first and second selected data packets SP1, SP2 are sent over the second path PF2 and third and fourth selected data packets SP3, SP4 are sent over the first path PF1. Another option is to send the first and fourth selected data packet SP1, SP4 over the first path PF1 and the second and third selected data packet SP2, SP3 over the second path PF2. In general it is important to note that one of the two selected data packets that are sent via the same path shall not contain a data packet that was used to encode the other of the two selected data packets. For example the first and the third selected data packet SP1=J1, SP3=P1 shall not sent together via the identical path, because the data packet P1 was used to encode the first joint data packet J1.

At the destination node D the four selected data packets SP1=J1, SP2=J2, SP3=P1, SP4=Q2 are received.

The missing data packets, which are the second data packet P2 of the first data packet stream P and the first data packet Q1 of the second data packet stream Q, can be reconstructed in analog way as described in the previous example by using the decoding method DM by:

$$Q1 = DM(J1, P1) = J1 + P1 \quad (5)$$

$$P2 = DM(J2, Q2) = J2 + Q2 \quad (6).$$

In an analog way the steps to perform the sending of the data packets of two data packet streams and the reconstruction of missing data packets when using the method for sending of the data packets of two data packet streams can be realized by an respective device DS for sending and a device DR for reconstructing as described in the previous example in an analogue way.

In an variation of this examples the path selection can be reactivated from time to time, e.g. after a predefined time interval such as each 20 seconds, or after sending of a predefined number of selected data packets, e.g. after each transmission of each selected data packet over a particular path.

Literature

[1] http://en.wikipedia.org/wiki/Pretty_Good_Privacy

**Claims**

1.  Method for sending data packets (P1, P2) of a first data packet stream (P) in a network (NET) with nodes (A, ..., D) comprising:

    Selecting two paths (PF1, PF2) from a source node (A) to a destination node (D) in the network (NET), whereby the paths (PF1, PF2) are disjoint;
    Generating a first joint data packet (J1) by an encoding method (EM) using both the first and second data packets (P1, P2), whereby on the basis of both the first joint data packet (J1) and one of the data packets (P1) the other data packet (P2) is recoverable;
    Selecting two selected data packets (SP1, SP2) by assigning the first joint data packet (J1) to the first selected data packet (SP1), and one of the data packets (P1) of the first data packet stream (P) to the second selected data packet (SP2);
    Sending the first selected data packet (SP1=J1) over the first path (PF1) and the second selected data packet (SP2=P1) over the second path (PF2).

2.  Method for sending data packets (P1, P2) of a first data packet stream (P) and of data packets (Q1, Q2) of a second data packet stream (Q) in a network (NET) with nodes (A, ..., D) comprising:

    Selecting two paths (PF1, PF2) from a source node (A) to a destination node (D) in the network (NET), whereby the paths (PF1, PF2) are disjoint;
    Generating a first joint data packet (J1) by an encoding method (EM) using both the first data packet (P1) of the first data stream (P) and the first data packet (Q1) of the second data stream (Q), whereby on the basis of both the first joint data packet (J1) and one of the data packets (P1) the other data packet (Q1) is recoverable;
    Generating a second joint data packet (J2) by the encoding method (EM) by using the second data packet (P2) of the first data stream (P) and the second data packet (Q2) of the second data stream (Q), whereby on the basis of both the second joint data packet (J2) and one of the data packets (P2) the other data packet (Q2) is recoverable;
    Selecting four data packets (SP1, SP2, SP3, SP4) by assigning the first and second joint data packets (J1, J2) to the first and second selected data packets (SP1, SP2), the first data packets (P1) of the first data packet stream (P) to the third selected data packet (SP3) and by the second data packet (Q2) of the second data packet stream (Q) to the fourth selected data packet (SP3);
Sending two selected data packets (SP1=J1, SP2=J2) over the first path (PF1) and the residual two selected data packets (SP3=P1, SP4=Q2) over the second path (PF2), whereby one of the two selected data packets that are sent via the same path must not contain a data packet that was used to encode the other of these two selected data packets.

3.  Method depending on claim 2 further comprising:

    Reselecting the two paths (PF1, PF2) before sending the respective second selected data packet (SP2, SP4) over the first and second paths (PF1, PF2), whereby these two paths (PF1, PF2) are disjoint.

4.  Method depending on one of the claims 1 to 3 further comprising:

    Performing the encoding method (EM) by a linear combination method.

5.  Method depending on claim 4 further comprising:

    Performing the linear combination by a bitwise EXOR-operation.

6.  Method for reconstructing a second data packet (P2) of a first data packet stream (P) comprising:

    Receiving a first joint data packet (J1) from a first path (PF1) and a first data packet (P1) of the first data packet stream (P) from a second path (PF2) at a destination node (D), whereby the first and second paths (PF1, PF2) are two paths from a source node (A) to the destination node (D) in a network (NET) and the two paths are disjoint, and whereby the joint data packet (J1) is generated using both the first and second data packets (P1, P2);
    Reconstructing the second data packet (P2) by performing a decoding method (DM) using both the joint data packet (J1) and the first data packet (P1).

7.  Method for reconstructing data packets (P2, Q1) of first and second data packet streams (P, Q) comprising:

    Receiving two selected data packets (SP1, SP2) from a first path (PF1) and another two selected packets (SP3, SP4) from a second path (PF2),

    - whereby the selected data packets (SP1, SP2, SP3, SP4) cover a first and a second joint data packet (J1, J2), a first data packet (P1) of the first data packet stream (P) and a second data packet (Q2) of the second data packet stream (Q),
    - whereby the first and second paths (PF1, PF2) are two paths from a source node (A) to the destination node (D) in a network (NET) and the two paths are disjoint,
    - whereby the first joint data packet (J1) is generated using both the first data packet (P1) of the first data stream (P) and the first data packet (Q1) of the second data stream (Q) and the second joint data packet (J2) is generated by using both the second data packet (P2) of the first data stream (P) and the second data packet (Q2) of the second data stream (Q);

    Reconstructing the second data packet (P2) of the first data packet stream (P) by performing a decoding method (DM) using both the second joint data packet (J2) and the second data packet (Q2) of the second data packet stream (Q); Reconstructing the first data packet (Q1) of the second data packet stream (Q) by performing the decoding method (DM) using both the first joint data packet (J1) and the first data packet (P1) of the first data packet stream (P).

8.  Method depending on claim 6 or 7 further comprising:

    Performing the decoding method (DM) by a linear combination method.

9.  Method depending on claim 8 further comprising:

    Performing the linear combination by a bitwise EXOR-operation.

10. Device (DS) for sending of data packets (P1, P2) of a first data packet stream (P) in a network (NET) with nodes (A, ..., D) comprising:

a first means (M1) to select two paths (PF1, PF2) from a source node (A) to a destination node (D) in the network (NET), whereby the paths (PF1, PF2) are disjoint;

a second means (M2) to generate a first joint data packet (J1) by an encoding method (EM) using both the first and second data packets (P1, P2), whereby on the basis of both the first joint data packet (J1) and one of the data packets (P1) the other data packet (P2) is recoverable;

a third means (M3) to select two selected data packets (SP1, SP2) by assigning the first joint data packet (J1) to the first selected data packet (SP1), and one of the data packets (P1) of the first data packet stream (P) to the second selected data packet (SP2);

a fourth means (M4) to send the first selected data packet (SP1=J1) over the first path (PF1) and the second selected data packet (SP2=P1) over the second path (PF2).

11. Device (DS) for sending data packets (P1, P2) of a first data packet stream (P) and of data packets (Q1, Q2) of a second data packet stream (Q) in a network (NET) with nodes (A, ..., D) comprising:

a first means (M1) to select two paths (PF1, PF2) from a source node (A) to a destination node (D) in the network (NET), whereby the paths (PF1, PF2) are disjoint;

a second means (M2) to generate a first joint data packet (J1) by an encoding method (EM) using both the first data packet (P1) of the first data stream (P) and the first data packet (Q1) of the second data stream (Q), whereby on the basis of both the first joint data packet (J1) and one of the data packets (P1) the other data packet (Q1) is recoverable, and to generate a second joint data packet (J2) by the encoding method (EM) by using the second data packet (P2) of the first data stream (P) and the second data packet (Q2) of the second data stream (Q), whereby on the basis of both the second joint data packet (J2) and one of the data packets (P2) the other data packet (Q2) is recoverable;

a third means to select four data packets (SP1, SP2, SP3, SP4) by assigning the first and second joint data packets (J1, J2) to the first and second selected data packets (SP1, SP2), the first data packets (P1) of the first data packet stream (P) to the third selected data packet (SP3) and by the second data packet (Q2) of the second data packet stream (Q) to the fourth selected data packet (SP3);

a fourth means to send two selected data packets (SP1=J1, SP2=J2) over the first path (PF1) and the residual two selected data packets (SP3=P1, SP4=Q2) over the second path (PF2), whereby one of the two selected data packets that are sent via the same path must not contain a data packet that was used to encode the other of these two selected data packets.

12. Device (DS) depending on claim 10 or 11 further comprising:

the fourth means (M4) further executes one the steps of claims 3 to 5.

13. Device (DR) for reconstructing a second data packet (P2) of a first data packet stream (P) comprising:

a fifth means (M5) to receive a first joint data packet (J1) from a first path (PF1) and the first data packet (P1) of the first data stream (P) from a second path (PF2) at a destination node (D), whereby the first and second paths (PF1, PF2) are two paths from a source node (A) to the destination node (D) in a network (NET) and the two paths are disjoint, and whereby the joint data packet (J1) is generated using both the first and second data packets (P1, P2);

a sixth means (M6) to reconstruct the second data packet (P2) by performing a decoding method (DM) using both the joint data packet (J1) and the first data packet (P1).

14. Device (DR) for reconstructing a data packets (P2, Q1) of first and second data packet streams (P, Q) comprising:

a fifth means (M5) to receive two selected data packets (SP1, SP2) from a first path (PF1) and another two selected packets (SP3, SP4) from a second path (PF2),

- whereby the selected data packets (SP1, SP2, SP3, SP4) cover a first and a second joint data packet (J1, J2), a first data packet (P1) of the first data packet stream (P) and a second data packet (Q2) of the second data packet stream (Q),

- whereby the first and second paths (PF1, PF2) are two paths from a source node (A) to the destination node (D) in a network (NET) and the two paths are disjoint,

- whereby the first joint data packet (J1) is generated using both the first data packet (P1) of the first data stream (P) and the first data packet (Q1) of the second data stream (Q) and the second joint data packet (J2) is generated using both the second data packet (P2) of the first data stream (P) and the second data packet (Q2) of the second data stream (Q);

Reconstructing the second data packet (P2) of the first data packet stream (P) by performing a decoding method (DM) using both the second joint data packet (J2) and the second data packet (Q2) of the second data packet stream (Q);
a sixth means (M6) to reconstruct the first data packet (Q1) of the second data packet stream (Q) by performing the decoding method (DM) using both the first joint data packet (J1) and the first data packet (P1) of the first data packet stream (P).

**15.** Device (DR) depending on claim 13 or 14 further comprising:

the sixth means (M6) further executes one the steps of claims 8 to 9.

## FIG 1

## FIG 2

## FIG 3

```
        ┌─────────┐
        │  START  │
        └────┬────┘
             │                          DR
    ┌────────┼──────────────────────┐
    │        ▼                       │
    │  ┌──────────────────┐          │
    │  │                  │──── S5, M5
    │  └────────┬─────────┘          │
    │           ▼                    │
    │  ┌──────────────────┐          │
    │  │  P2=DM(J1, P1)    │──── S6, M6
    │  └────────┬─────────┘          │
    └───────────┼────────────────────┘
                ▼
          ┌─────────┐
          │   END   │
          └─────────┘
```

## FIG 4

**European Patent Office**

**EUROPEAN SEARCH REPORT**

Application Number

EP 07 01 4932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 948 176 A (SIEMENS INF & COMM NETWORKS [US]) 6 October 1999 (1999-10-06) * claim 17 * ----- | 1-15 | INV. H04L29/06 H04L12/56 |
| Y | BRUCE SCHNEIER: "Applied Cryptography" 1996, WILEY , NEW YORK 238530 , XP002495601 * page 15 - page 17 * ----- | 1-15 | |

TECHNICAL FIELDS
SEARCHED (IPC)

H04L

The present search report has been drawn up for all claims

| Place of search | Date of completion of the search | Examiner |
|---|---|---|
| The Hague | 12 September 2008 | Veen, Gerardus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**          EP 07 01 4932

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2008

| Patent document cited in search report | | Publication date | Patent family member(s) | | Publication date |
|---|---|---|---|---|---|
| EP  0948176 | A | 06-10-1999 | DE<br>US | 69933902  T2<br>6122743  A | 24-05-2007<br>19-09-2000 |

EPO FORM P0459

For more details about this annex : see Official Journal of the European Patent Office, No. 12/82